# EUROPÄISCHE PATENTSCHRIFT

(11) **EP 3 315 834 B1**
(45) Veröffentlichungstag und Bekanntmachung des Hinweises auf die Patenterteilung: **27.02.2019**
(21) Anmeldenummer: 17197904.0
(22) Anmeldetag: 24.10.2017
(51) Int. Cl.: F16K 1/22, F01N 1/18, F01N 13/08, F02D 9/10, F16K 1/226, F02M 26/70

(54) **ABGASKLAPPE**
EXHAUST FLAP
CLAPET D'ÉCHAPPEMENT

(30) Priorität: 31.10.2016 DE 102016120738
(43) Veröffentlichungstag der Anmeldung: 02.05.2018
(73) Patentinhaber: Eberspächer Exhaust Technology GmbH & Co. KG, 66539 Neunkirchen (DE)
(72) Erfinder: Stark, Annika, 73249 Wernau (DE); Schmitt, Steffen, 73760 Ostfildern (DE); Varelis, Stefanos, 70771 Leinfelden (DE); Müller, Bernd, 66793 Saarwellingen (DE); Pallmann, Jan, 66482 Zweibrücken (DE)
(74) Vertreter: Ruttensperger Lachnit Trossin Gomoll

(56) Entgegenhaltungen:
- EP-A1- 0 424 197
- DE-A1- 19 615 438
- DE-A1-102014 112 398
- US-A1- 2013 299 728

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende mit wenigstens einem an der Schwenkwelle angebrachten Klappenflügel, sowie in Zuordnung zu wenigsten einem Klappenflügel an einem Innenumfangsbereich des Klappenrohrs einen Flügelanschlag.

In Fig. 1 ist eine in der nachveröffentlichten deutschen Patentanmeldung DE 10 2016 111 681 offenbarte und beispielsweise in einer Abgasanlage einer Brennkraftmaschine einsetzbare Abgasklappe allgemein mit 10 bezeichnet. Der Abgasklappe 10 ist ein beispielsweise elektromotorisch arbeitender Klappenantrieb 12 zugeordnet. Eine Antriebswelle 14 des Klappenantriebs 12 ist zur gemeinsamen Drehung mit einer Schwenkwelle 16 der Abgasklappe 10 gekoppelt. Die Schwenkwelle 16 ist in ihren beiden Endbereichen 18, 20 über nicht dargestellte Lager in Lagerbuchsen 19, 21 an einem Klappenrohr 22 um eine Schwenkachse A schwenkbar getragen.

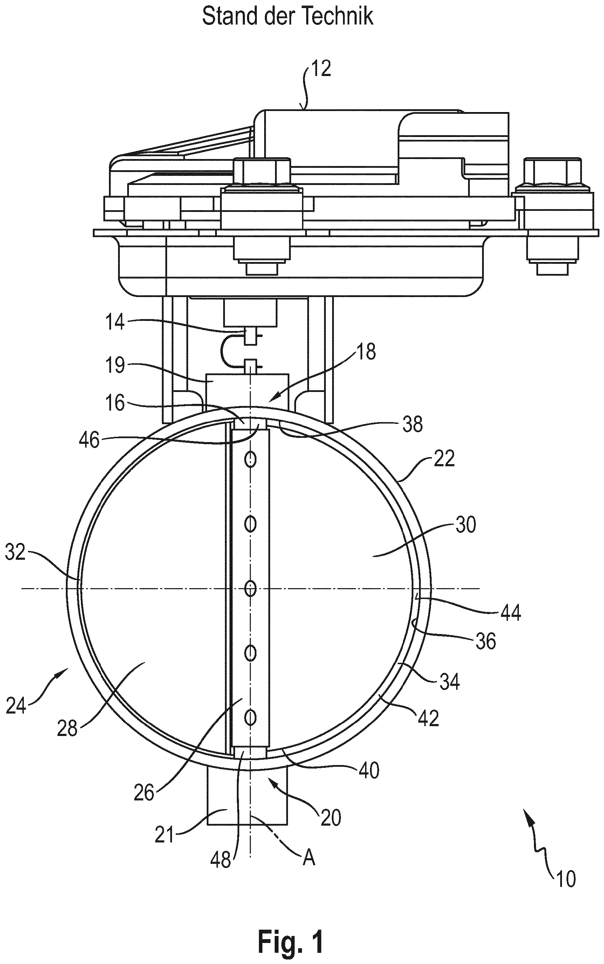

An der Schwenkwelle 16 ist im Inneren des in diesem Ausgestaltungsbeispiel mit im Wesentlichen kreisrundem Querschnitt und entsprechend kreisrunder Innenkontur ausgestalteten Klappenrohrs 22 eine allgemein mit 24 bezeichnete Klappenblende getragen. Die Klappenblende 24 umfasst zwei mit einem jeweiligen Anbringungsbereich an der Schwenkwelle 16 durch Verschweißung angebrachte Klappenflügel 28, 30. Die Anbringungsbereiche der Klappenflügel 28, 30, von welchen in Fig. 1 der Anbringungsbereich 26 des Klappenflügels 30 erkennbar ist, sind rohrartig gekrümmt ausgebildet und umgeben die mit kreisrunder Außenumfangskontur ausgebildete Schwenkwelle 16 in einem Teilbereich ihres Außenumfangs.

In Zuordnung zu jedem der beiden Klappenflügel 28, 30 ist am Klappenrohr 22 ein ringsegmentartig ausgebildeter Flügelanschlag 32, 34 vorgesehen. Die beiden Flügelanschläge 32, 34 sind am Innenumfang 36 des Klappenrohrs 22 materialschlüssig festgelegt. Wie in Fig. 1 beispielsweise anhand des Flügelanschlags 34 veranschaulicht, erstreckt sich dieser unterbrechungsfrei entlang des Innenumfangs 36 des Klappenrohrs 22 ausgehend von einem dem ersten axialen Endbereich 18 der Schwenkwelle 16 nahe liegenden ersten Umfangsendbereich 38 zu einem dem zweiten axialen Endbereich 20 der Schwenkwelle 16 nahe liegenden zweiten Umfangsendbereich 40. An einer in Richtung einer Klappenrohr-Längsachse orientierten Stirnseite 42 stellt der Flügelanschlag 34 eine Anschlagfläche 44 für den Klappenflügel 30 bereit.

Um bei Drehung der Klappenblende 24 um die Schwenkachse A ein gegenseitiges Stören der Anbringungsbereiche der Klappenflügel 28, 30 mit den bis an die Schwenkwelle 16 heranreichenden Flügelanschlägen 32, 34 zu vermeiden, sind in den bezüglich der Schwenkachse A axialen Endbereichen der Anbringungsbereiche Aussparungen vorgesehen, in welche bei Drehung der Klappenblende 24 die Umfangsendbereiche 38, 40 der Flügelanschläge 32, 34 eintreten können. In Fig. 1 sind die bei dem Anbringungsbereich 26 des Klappenflügels 30 vorgesehenen Aussparungen 46, 48 zu erkennen.

Eine Abgasklappe gemäß dem Oberbegriff des Anspruchs 1 ist aus der EP 0 424 197 A1 bekannt.

Es ist die Aufgabe der vorliegenden Erfindung, eine Abgasklappe, insbesondere für den Abgasstrom einer Brennkraftmaschine, vorzusehen, welche bei baulich einfacher Ausgestaltung bei in einer Schließstellung positionierter Klappenblende im Wesentlichen keine Leckageströme zulässt.

Erfindungsgemäß wird diese Aufgabe gelöst durch eine Abgasklappe, insbesondere für den Abgasstrom einer Brennkraftmaschine, gemäß Anspruch 1. Diese umfasst ein Klappenrohr, eine im Inneren des Klappenrohrs an einer um eine Schwenkachse drehbaren Schwenkwelle getragene Klappenblende mit wenigstens einem an der Schwenkwelle angebrachten Klappenflügel, sowie in Zuordnung zu wenigsten einem, vorzugsweise jedem Klappenflügel an einem Innenumfangsbereich des Klappenrohrs einen Flügelanschlag.

Dabei ist ferner vorgesehen, dass wenigstens ein, vorzugsweise jeder Klappenflügel einen Anbringungsbereich mit einer im Wesentlichen ungekrümmten Anbringungsfläche aufweist und an der Schwenkwelle in Zuordnung zu diesem Klappenflügel eine der Anbringungsfläche gegenüberliegende, im Wesentlichen ungekrümmte Gegen-Anbringungsfläche vorgesehen ist, oder/und dass am Außenumfangsbereich der Schwenkwelle in Zuordnung zu wenigstens einem, vorzugsweise jedem Klappenflügel eine einen Gegen-Anbringungsbereich bereitstellende und einen Anbringungsbereich dieses Klappenflügels wenigstens teilweise aufnehmende Anbringungsaussparung vorgesehen ist.

Durch die erfindungsgemäße Ausgestaltung der Klappenblende, insbesondere der Schwenkwelle bzw. eines oder mehrerer damit zu verbindender Klappenflügel, wird die Möglichkeit geschaffen, bei einfacher konstruktiver Ausgestaltung auch im Angrenzungsbereich eines jeweiligen Flügelanschlags an die Schwenkwelle dann, wenn die Klappenblende in der Schließstellung ist, einen im Wesentlichen vollständigen Abschluss des Strömungswegs bereitzustellen, um somit Leckageströme im Wesentlichen zu unterbinden. Ferner wird mit diesem Aufbau die Abgasklappe mit sehr guter akustischer Dichtigkeit bereitgestellt.

Um eine bezüglich der Schwenkachse der Schwenkwelle im Wesentlichen symmetrische Ausgestaltung bereitstellen zu können, ist erfindungsgemäß vorgesehen, dass an der Schwenkwelle zwei Klappenflügel angebracht sind, und dass in Zuordnung zu jedem Klappenflügel eine Anbringungsaussparung vorgesehen ist, wobei vorzugsweise die den beiden Klappenflügeln zugeordneten Anbringungsaussparungen bezüglich der Schwenkachse im Wesentlichen punkt- bzw. achsensymmetrisch ausgebildet sind.

Ferner wird eine symmetrische Ausgestaltung der Klappenblende einer erfindungsgemäß aufgebauten Abgasklappe unterstützt, indem an der Schwenkwelle zwei Klappenflügel angebracht sind und in Zuordnung zu jedem Klappenflügel eine Gegen-Anbringungsfläche vorgesehen ist. Dabei können die den beiden Klappenflügeln zugeordneten Gegen-Anbringungsflächen zueinander im Wesentlichen parallel angeordnet sein.

Ein gegen den Hindurchtritt von Abgas zuverlässiger Abschluss im Bereich der Anlagewechselwirkung eines Klappenflügels mit dem diesem zugeordneten Flügelanschlag wird dadurch erreicht, dass in Zuordnung zu wenigstens einem, vorzugsweise jedem Klappenflügel der diesem Klappenflügel zugeordnete Flügelanschlag eine im Wesentlichen in Richtung einer Klappenrohr-Längsachse orientierte Anschlagfläche aufweist, und dass bei in einer Schließstellung positionierter Klappenblende der Klappenflügel an der Anschlagfläche des Flügelanschlags anliegt und die der Anbringungsfläche dieses Klappenflügels gegenüberliegende Gegen-Anbringungsfläche bezüglich der Anschlagfläche in Richtung der Klappenrohr-Längsachse zurückversetzt liegt, vorzugsweise zu der Anschlagfläche im Wesentlichen parallel angeordnet ist.

Auch bei dieser Ausgestaltung kann ein symmetrischer Aufbau der Klappenblende und somit eine gleichartige Zusammenwirkung jedes Klappenflügels mit dem zugeordneten Flügelanschlag dadurch unterstützt werden, dass in Zuordnung zu jedem Klappenflügel der diesem Klappenflügel zugeordnete Flügelanschlag eine im Wesentlichen in Richtung einer Klappenrohr-Längsachse orientierte Anschlagfläche aufweist, und dass ein Abstand der den beiden Klappenflügeln zugeordneten Gegen-Anbringungsflächen zueinander kleiner ist als ein Abstand der den beiden Klappenflügeln zugeordneten Anschlagflächen zueinander in Richtung der Klappenrohr-Längsachse.

Bei der erfindungsgemäßen Abgasklappe kann die in Zuordnung zu wenigstens einem Klappenflügel vorgesehene Anbringungsaussparung, vorzugsweise jede Anbringungsaussparung, die der Anbringungsfläche dieses Klappenflügels gegenüberliegende Gegen-Anbringungsfläche bereitstellen.

Ferner kann vorgesehen sein, dass wenigstens eine Anbringungsaussparung nur in dem im Inneren des Klappenrohrs sich erstreckenden Längenbereich der Schwenkwelle vorgesehen ist. In den das Klappenrohr im Bereich dafür jeweils vorgesehener Öffnungen durchsetzenden Längenbereichen sind derartige Aussparungen dann nicht vorgesehen, was insbesondere auch für eine verbesserte Lagerungszusammenwirkung der Schwenkwelle mit diese drehbar lagernden Lagern sorgt.

Um beim Zusammenbau der Klappenblende, also beim Anbringen eines jeweiligen Klappenflügels an der Schwenkwelle, eine definierte Positionierung für diesen Klappenflügel gewährleisten zu können, wird vorgeschlagen, dass in Zuordnung zu wenigstens einem, vorzugsweise jedem Klappenflügel an der Schwenkwelle ein eine Positionierung dieses Klappenflügels bezüglich der Schwenkwelle im Wesentlichen orthogonal zur Schwenkachse vorgebender Montageanschlag vorgesehen ist.

Dies kann bei baulich einfacher Ausgestaltung beispielsweise dadurch erreicht werden, dass die diesem Klappenflügel zugeordnete Anbringungsaussparung eine zu der durch diese Anbringungsaussparung bereitgestellten Gegen-Anbringungsfläche vorzugsweise im Wesentlichen orthogonale Montageanschlagfläche bereitstellt.

Eine den Hindurchtritt von Abgas in der Schließstellung der Klappenblende im Wesentlichen unterbindende Zusammenwirkung eines jeweiligen Klappenflügels mit einem Flügelanschlag kann dadurch erreicht werden, dass die Schwenkwelle in ihren beiden axialen Endbereichen am Klappenrohr um die Schwenkachse drehbar getragen ist, und dass eine Anschlagfläche wenigstens eines, vorzugsweise jedes Flügelanschlags sich in Umfangsrichtung von einem im Bereich eines ersten axialen Endbereichs der Schwenkwelle positionierten ersten Umfangsendbereich des Flügelanschlags unterbrechungsfrei zu einem im Bereich eines zweiten axialen Endbereichs der Schwenkwelle positionierten zweiten Umfangsendbereich des Flügelanschlags erstreckt.

Um die Klappenblende im Klappenrohr in verschiedene Betriebsstellungen bringen zu können, wird vorgeschlagen, dass die Schwenkwelle in einem ihrer beiden axialen Endbereiche mit einem die Schwenkwelle zur Drehbewegung um die Schwenkachse antreibenden Klappenantrieb gekoppelt ist.

Die vorliegende Erfindung wird nachfolgend mit Bezug auf die beiliegenden Figuren detailliert beschrieben. Es zeigt:
- Fig. 1: eine aus dem Stand der Technik bekannte Abgasklappe mit zugeordnetem Klappenantrieb;
- Fig. 2: eine erfindungsgemäß aufgebaute Klappenblende im Längsschnitt;
- Fig. 3: eine Detail-Querschnittansicht einer Schwenkwelle der Abgasklappe und der damit zusammenwirkenden Komponenten;
- Fig. 4: eine der Fig. 3 entsprechende Detailansicht in perspektivischer Betrachtung ohne an der Schwenkwelle angebrachten Klappenflügeln;
- Fig. 5: eine der Fig. 3 entsprechende Detailansicht, betrachtet in Richtung einer Klappenrohr-Längsachse.

Nachfolgend wird der erfindungsgemäße Aufbau einer erfindungsgemäßen Abgasklappe detailliert beschrieben. Der grundsätzliche Aufbau dieser Abgasklappe bzw. auch die Zusammenwirkung der Klappenblende derselben mit dem Klappenantrieb und mit den Flügelanschlägen entsprechen in weiten Bereichen dem vorangehend mit Bezug auf die Fig. 1 beschriebenen Aufbau. Es wird daher diesbezüglich auf die voranstehenden Ausführungen zur Fig. 1 verwiesen, welche hinsichtlich dieser allgemeinen Aspekte auch einen Aufbau zeigt, bei welchem die nachfolgend detailliert beschriebenen erfindungsgemäßen Ausgestaltungsaspekte realisiert sein können.

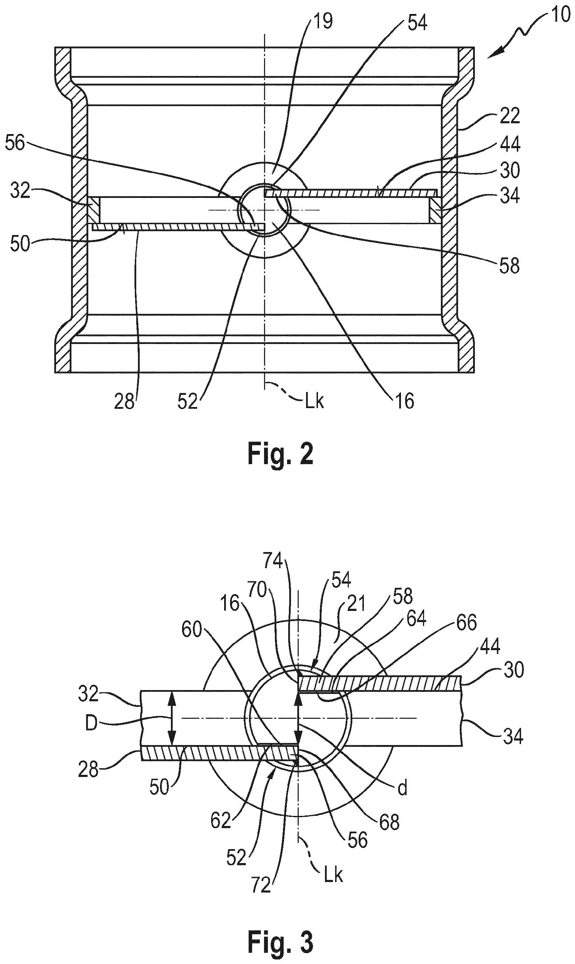

Die Fig. 2 zeigt im Längsschnitt das Klappenrohr 22 der erfindungsgemäßen Abgasklappe 10. Dieses weist insbesondere in demjenigen Bereich, in welchem die Schwenkwelle 16 am Klappenrohr 22 getragen ist, einen im Wesentlichen zylindrischen Aufbau, beispielsweise mit kreisrunder Kontur auf.

Die Klappenblende 24 weist zwei Klappenflügel 28, 30 auf, die zueinander im Wesentlichen identisch aufgebaut sein können und mit den diesen zugeordneten Flügelanschlägen 32, 34 gleichartig zusammenwirken können.

Die beiden Flügelanschläge 32, 34 können in ihrer Gesamtheit eine ringartige Struktur bereitstellen. Der dem Klappenflügel 28 zugeordnete Flügelanschlag 32 stellt in der Darstellung der Fig. 2 eine nach unten und somit im Wesentlichen in Richtung der Klappenrohr-Längsachse L_{K} orientierte Anschlagfläche 50 bereit, während der dem Klappenflügel 30 zugeordnete Flügelanschlag 34 eine in der Darstellung der Fig. 2 nach oben und somit ebenfalls in Richtung der Klappenrohr-Längsachse L_{K} orientierte und bereits mit Bezug auf die Fig. 1 erwähnte Anschlagfläche 44 bereitstellt. Jede dieser vorzugsweise im Wesentlichen plan ausgebildeten Anschlagflächen 50, 44 erstreckt sich halbkreisartig zwischen den beiden axialen Endbereichen 18, 20 der Schwenkwelle 16, so dass zwischen jeder der Anschlagflächen 50, 44 und der Schwenkwelle 16 ein nur geringer spaltartiger Zwischenraum gebildet ist.

Die beispielsweise mit kreisartiger Außenumfangskontur aufgebaute Schwenkwelle 16 weist an bezüglich der Schwenkachse A einander diametral gegenüberliegenden Positionen jeweils eine Aufnahmeaussparung 52, 54 auf. In Richtung der Schwenkachse A sind diese Aufnahmeaussparungen 52,54 so dimensioniert, dass sie sich nur in dem im Inneren des Klappenrohrs 22 erstreckenden Längenbereich der Schwenkwelle 16 erstrecken. In Öffnungen im Klappenrohr 22 durchsetzenden und beispielsweise innerhalb der Lagerbuchsen 19, 21 gelagerten Längenbereichen ist die Schwenkwelle vorzugsweise mit im Wesentlichen kreisrunder Umfangskontur über den gesamten Umfang ausgebildet.

Der Klappenflügel 28 ist mit einem Anbringungsbereich 56 in die Anbringungsaussparung 52 eingreifend positioniert. Der Klappenflügel 30 ist mit einem Anbringungsbereich 58 in die Anbringungsaussparung 54 eingreifend positioniert. Dabei sei mit Bezug auf die Fig. 3 erwähnt, dass diese eine Positionierung der beiden Klappenflügel 28, 30 und auch der Schwenkwelle 16 darstellt, welche die Klappenblende 24 in einer Schließstellung einnimmt. In dieser Positionierung liegen die beiden Klappenflügel 28, 30 an den zugeordneten Flügelanschlägen 32, 34 bzw. den Anschlagflächen 50, 44 derselben an.

Im Anbringungsbereich 56 des Klappenflügels 28 ist eine im Wesentlichen plane, also ungekrümmte Anbringungsfläche 60 vorgesehen, welcher eine durch die Anbringungsaussparung 52 bereitgestellte Gegen-Anbringungsfläche 62 gegenüberliegt. In entsprechender Weise ist im Anbringungsbereich 58 des Klappenflügels 30 eine Anbringungsfläche 64 vorgesehen, welcher eine Gegen-Anbringungsfläche 66 der Anbringungsaussparung 54 gegenüberliegt. Jede der Anbringungsaussparungen 52, 54 stellt ferner eine Montageanschlagfläche 68 bzw. 70 bereit, an welcher ein jeweiliger Anbringungsbereich 56 bzw. 58 in einer Richtung im Wesentlichen orthogonal zur Schwenkachse A anliegt, um somit eine definierte Positionierung der Klappenflügel 28, 30 bezüglich der Schwenkwelle 16 insbesondere beim Zusammenbau der Klappenblende 24 vorzugeben.

Man erkennt in Fig. 3, dass der in Richtung der Klappenrohr-Längsachse L_{K} gemessene Abstand D der den beiden Klappenflügeln 28, 30 zugeordneten Anschlagflächen 50, 44 größer ist, als der Abstand d der im Wesentlichen parallel zueinander liegenden Gegen-Anbringungsflächen 62, 66. Dies führt dazu, dass bei an den Anschlagflächen 50, 44 anliegenden Klappenflügeln 28, 30 und bei einer Positionierung der Schwenkwelle 16 derart, dass die Anbringungsbereiche 56, 58 der Klappenflügel 28, 30 bündig an den Montageanschlagflächen 68, 70 anliegen und dabei die zu den Montageanschlagflächen 68, 70 im Wesentlichen orthogonal orientierten Gegen-Anbringungsflächen 62, 66 im Wesentlichen parallel zu den Anschlagflächen 50, 44 liegen, ein spaltartiger Zwischenraum zwischen einem jeweiligen Anbringungsbereich 56, 58 und der der Anbringungsfläche 60, 64 eines jeweiligen Anbringungsbereichs 56, 58 gegenüberliegenden Gegen-Anbringungsfläche 62, 66 vorhanden ist.

Beim Zusammenbau der Abgasklappe kann, nachdem zunächst die Schwenkwelle 16 ohne die daran angebrachten Klappenflügel 28, 30 in den Lagerbuchsen 19, 21 drehbar am Klappenrohr 22 angebracht worden ist, die Schwenkwelle 16 so positioniert werden, dass die bezüglich der Schwenkachse A vorzugsweise im Wesentlichen punkt- bzw. achsensymmetrisch ausgebildeten Anbringungsaussparungen 52, 54 so positioniert sind, dass die durch diese Anbringungsaussparungen 52, 54 bereitgestellten Gegen-Anbringungsflächen 62, 66 im Wesentlichen parallel zu den Anschlagflächen 50, 44 der zuvor ebenfalls am Klappenrohr 22 angebrachten Flügelanschläge 32, 34 orientiert ist. Nachfolgend werden die Klappenflügel 28, 30 angebracht, indem diese an den jeweils zugeordneten Flügelanschlägen 32, 34 bzw. den Anschlagflächen 50, 44 derselben und auch den Montageanschlagflächen 68, 70 anliegend positioniert werden. Dieser Vorgang kann für beide Klappenflügel 28 gleichzeitig durchgeführt werden. Es kann grundsätzlich jedoch auch zunächst einer der beiden Klappenflügel 28, 30 mit der Schwenkwelle 16 verbunden werden, und darauffolgend der andere Klappenflügel.

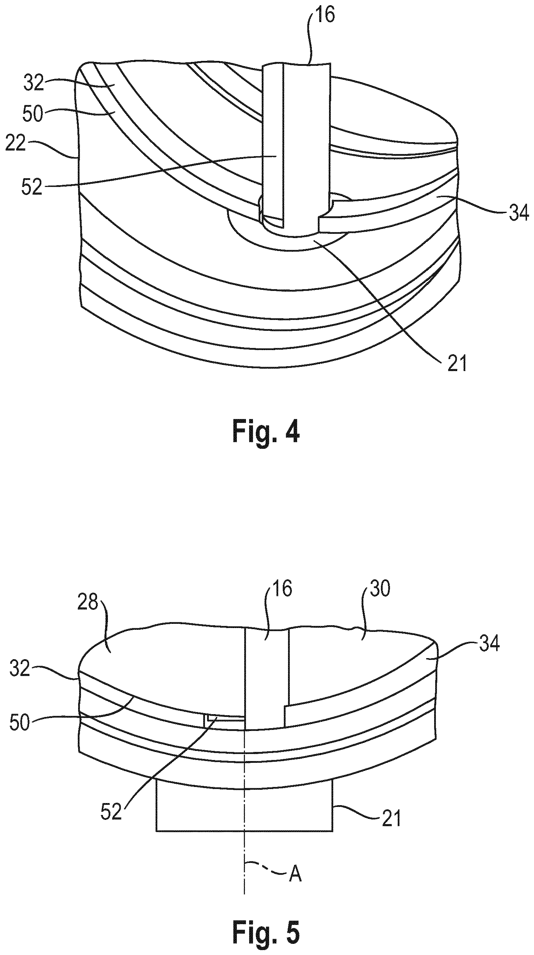

Nachdem beispielsweise einer der beiden Klappenflügel 28, 30 in der vorangehend beschriebenen Positionierung angeordnet wurde, kann erforderlichenfalls durch Einwirken beispielsweise auf den axialen Endbereich 18 der Schwenkwelle 16 diese noch geringfügig gedreht werden, um sie in die für die feste Verbindung mit diesem Klappenflügel vorgesehene Positionierung zu bringen, wie sie beispielsweise in den Fig. 3-5 dargestellt ist, sofern diese Positionierung der Schwenkwelle 16 zuvor noch nicht exakt erreicht war. Nachfolgend kann dann der Klappenflügel, beispielsweise der Klappenflügel 28, durch Verschweißung mit der Schwenkwelle 16 verbunden werden. Hierzu kann beispielsweise durch Laserschweißen eine Kehlnaht 72 zwischen der Montageanschlagfläche 68 und dem angrenzenden Anbringungsbereich 56 des Klappenflügels 28 hergestellt werden. In entsprechender Weise kann zwischen dem Klappenflügel 30 und der Montageanschlagfläche 70 eine Kehlnaht 74 erzeugt werden. Auch in denjenigen Bereichen, in welchen die Anbringungsflächen 60, 64 den Gegen-Anbringungsflächen 62, 66 angrenzend an den Außenumfangsbereich der Schwenkwelle 16 gegenüberliegen, können, nach Verdrehung der mit den Klappenflügeln 28, 30 verbundenen Schwenkwelle 16 aus der in Fig. 2 bzw. in Fig. 3 dargestellten Schließstellung der Klappenblende 24 Verschweißungen, beispielsweise ebenfalls Kehlnähte, gebildet werden, um auf diese Art und Weise die stabile Anbindung der Klappenflügel 28, 30 an die Schwenkwelle 16 zu unterstützen. Insbesondere diese Kehlnähte sind so auszuführen, dass ein gegenseitiges Stören mit den Umfangsendbereichen der sehr nahe bis an die Schwenkwelle 16 herangeführten Flügelanschläge 32, 34 vermieden wird.

Da bei dem vorangehend beschriebenen Aufbau die Klappenflügel 28, 30 mit ihren Anbringungsbereichen 56, 58 in die Anbringungsaussparungen 52, 54 eingreifend positioniert sind und somit ein Umgreifen der Schwenkwelle 16 an deren Außenumfangsbereich durch die Klappenflügel 28, 30, wie dies bei dem aus dem vorangehend beschriebenen Stand der Technik bekannten Aufbau der Fall ist, vermieden wird, besteht beim Verschwenken der Klappenblende 24 aus der in den Fig. 2 und 3 dargestellten Schließstellung in eine um etwa 90° bezüglich dieser Schließstellung verdrehte Offenstellung, bei welcher die beiden Klappenflügel 28, 30 sich im Wesentlichen in Richtung der Klappenrohr-Längsachse L_{K} erstrecken, nicht das Problem, dass ein gegenseitiges Stören der Anbringungsbereiche 56, 58 mit den bis nahe an die Schwenkwelle 16 herangeführten Flügelanschlägen 32, 34 auftritt. Dazu ist vorzugsweise jede der Anbringungsaussparungen 52, 54 derart dimensioniert, dass sie sich in Umfangsrichtung über nicht mehr als ein 1/4 des Außenumfangs der Schwenkwelle 16 erstreckt.

Auch im Angrenzungsbereich der Klappenflügel 28, 30 bzw. der Anbringungsbereiche 56, 58 derselben an die axialen Endbereiche 18, 20 der Schwenkwelle 16 können die Klappenflügel 28, 30 sich daher bis an die Montageanschlagflächen 68, 70 heran erstrecken, so dass das Entstehen spaltartiger Zwischenräume, durch welche Abgas auch in der Schließstellung der Klappenblende 24 hindurchtreten könnte, an den axialen Endbereichen 18, 20 der Schwenkwelle 16 im Wesentlichen vermieden wird. Damit wird auch die akustische Dichtigkeit der Abgasklappe 10 unterstützt. Die Klappenflügel 28, 30 können somit im Wesentlichen über deren gesamten Außenumfangsbereich mit den Anschlagflächen 50, 44 der Flügelanschläge 32, 34 zum Abschließen des Klappenrohrs 22 zusammenwirken. Dazu trägt auch bei, dass die Schwenkwelle 16 bzw. die daran vorgesehenen Gegen-Anbringungsflächen 62, 64 so dimensioniert bzw. bezüglich einander positioniert sind, dass bei der Montage und nach der Montage gewährleistet ist, dass die Klappenflügel 28, 30 vollständig an den diesen jeweils zugeordneten Flügelanschlägen 32, 34 anliegen, gleichwohl jedoch der für die Funktionalität der Abgasklappe 10 besonders vorteilhafte, bezüglich der Schwenkachse A im Wesentlichen symmetrische Aufbau der Klappenblende 24 erreicht werden kann. Durch das gezielte Bereitstellen der spaltartigen Zwischenräume zwischen den einander jeweils gegenüberliegenden Anbringungsflächen 60, 64 und Gegen-Anbringungsflächen 62, 66 wird auch unter Berücksichtigung der beim Aufbau derartiger Systeme unvermeidbaren Fertigungstoleranzen sichergestellt, dass dieser Kontakt zwischen den Klappenflügeln 28, 30 und den zugeordneten Anschlagflächen 50, 44 in der Schließstellung der Klappenblende 24 zuverlässig erreicht werden kann.

## Patentansprüche

1. Abgasklappe, insbesondere für den Abgasstrom einer Brennkraftmaschine, umfassend ein Klappenrohr (22), eine im Inneren des Klappenrohrs (22) an einer um eine Schwenkachse (A) drehbaren Schwenkwelle (16) getragene Klappenblende (24) mit wenigstens einem an der Schwenkwelle (16) angebrachten Klappenflügel (28, 30), sowie in Zuordnung zu wenigsten einem Klappenflügel (28, 30) an einem Innenumfangsbereich des Klappenrohrs (22) einen Flügelanschlag (32, 34), wobei in Zuordnung zu wenigstens einem Klappenflügel (28, 30) der diesem Klappenflügel (28, 30) zugeordnete Flügelanschlag (32, 34) eine im Wesentlichen in Richtung einer Klappenrohr-Längsachse (L_{K}) orientierte Anschlagfläche (50, 44) aufweist und bei in einer Schließstellung positionierter Klappenblende (24) der Klappenflügel (28, 30) an der Anschlagfläche (50, 44) des Flügelanschlags (32, 34) anliegt, wobei wenigstens ein Klappenflügel (28, 30) einen Anbringungsbereich (56, 58) mit einer im Wesentlichen ungekrümmten Anbringungsfläche (60, 64) aufweist und an der Schwenkwelle (16) in Zuordnung zu diesem Klappenflügel (28, 30) eine der Anbringungsfläche (60, 64) gegenüberliegende, im Wesentlichen ungekrümmte Gegen-Anbringungsfläche (62, 66) vorgesehen ist, wobei am Außenumfangsbereich der Schwenkwelle (16) in Zuordnung zu wenigstens einem Klappenflügel (28, 30) eine einen Gegen-Anbringungsbereich bereitstellende und einen Anbringungsbereich (56, 58) dieses Klappenflügels (28, 30) wenigstens teilweise aufnehmende Anbringungsaussparung (52, 54) vorgesehen ist, wobei an der Schwenkwelle (12) zwei Klappenflügel (28, 30) angebracht sind und in Zuordnung zu jedem Klappenflügel (28, 30) eine Anbringungsaussparung (52, 54) mit einer Gegen-Anbringungsfläche (62, 66) vorgesehen ist,
**dadurch gekennzeichnet, dass** die der Anbringungsfläche (60, 64) dieses Klappenflügels (28, 30) gegenüberliegende Gegen-Anbringungsfläche (62, 66) bezüglich der Anschlagfläche (50, 44) in Richtung der Klappenrohr-Längsachse (L_{K}) zurückversetzt liegt.

2. Abgasklappe nach Anspruch 1, **dadurch gekennzeichnet, dass** die den beiden Klappenflügeln (28, 30) zugeordneten Anbringungsaussparungen (52, 54) bezüglich der Schwenkachse (A) im Wesentlichen punktsymmetrisch ausgebildet sind.

3. Abgasklappe nach einem der vorangehenden Ansprüche, **dadurch gekennzeichnet, dass** die den beiden Klappenflügeln (28, 30) zugeordneten Gegen-Anbringungsflächen (62, 66) zueinander im Wesentlichen parallel angeordnet sind.

4. Abgasklappe nach einem der vorangehenden Ansprüche, **dadurch gekennzeichnet, dass** die der Anbringungsfläche (60, 64) dieses Klappenflügels (28, 30) gegenüberliegende Gegen-Anbringungsfläche (62, 66) zu der Anschlagfläche (50, 44) im Wesentlichen parallel angeordnet ist.

5. Abgasklappe nach Anspruch 3 und Anspruch 4, **dadurch gekennzeichnet, dass** in Zuordnung zu jedem Klappenflügel (28, 30) der diesem Klappenflügel (28, 30) zugeordnete Flügelanschlag (32, 34) eine im Wesentlichen in Richtung einer Klappenrohr-Längsachse (L_{K}) orientierte Anschlagfläche (50, 44) aufweist, und dass ein Abstand (d) der den beiden Klappenflügeln (28, 30) zugeordneten Gegen-Anbringungsflächen (62, 66) zueinander kleiner ist als ein Abstand (D) der den beiden Klappenflügeln (28, 30) zugeordneten Anschlagflächen (50, 44) zueinander in Richtung der Klappenrohr-Längsachse (L_{K}).

6. Abgasklappe nach einem der vorangehenden Ansprüche, **dadurch gekennzeichnet, dass** die in Zuordnung zu wenigstens einem Klappenflügel (28, 30) vorgesehene Anbringungsaussparung (52, 54) die der Anbringungsfläche (60, 64) dieses Klappenflügels (28, 30) gegenüberliegende Gegen-Anbringungsfläche (62, 66) bereitstellt, oder/und dass wenigstens eine Anbringungsaussparung (52, 54) nur in dem im Inneren des Klappenrohrs (22) sich erstreckenden Längenbereich der Schwenkwelle (16) vorgesehen ist.

7. Abgasklappe nach einem der vorangehenden Ansprüche, **dadurch gekennzeichnet, dass** in Zuordnung zu wenigstens einem Klappenflügel (28, 30) an der Schwenkwelle (16) ein eine Positionierung dieses Klappenflügels (28, 30) bezüglich der Schwenkwelle (16) im Wesentlichen orthogonal zur Schwenkachse (A) vorgebender Montageanschlag (68, 70) vorgesehen ist.

8. Abgasklappe nach Anspruch 6 und Anspruch 7, **dadurch gekennzeichnet, dass** die diesem Klappenflügel (28, 30) zugeordnete Anbringungsaussparung (52, 54) eine zu der durch diese Anbringungsaussparung (52, 54) bereitgestellten Gegen-Anbringungsfläche (62, 66) vorzugsweise im Wesentlichen orthogonale Montageanschlagfläche (68, 70) bereitstellt.

9. Abgasklappe nach einem der vorangehenden Ansprüche, **dadurch gekennzeichnet, dass** die Schwenkwelle (16) in ihren beiden axialen Endbereichen (18, 20) am Klappenrohr (22) um die Schwenkachse (A) drehbar getragen ist, und dass eine Anschlagfläche (50, 44) wenigstens eines Flügelanschlags (32, 34) sich in Umfangsrichtung von einem im Bereich eines ersten axialen Endbereichs (18) der Schwenkwelle (16) positionierten ersten Umfangsendbereich (38) unterbrechungsfrei zu einem im Bereich eines zweiten axialen Endbereichs (20) der Schwenkwelle (16) positionierten zweiten Umfangsendbereich (40) erstreckt.

10. Abgasklappe nach einem der vorangehenden Ansprüche, **dadurch gekennzeichnet, dass** die Schwenkwelle (16) in einem ihrer beiden axialen Endbereiche (18, 20) mit einem die Schwenkwelle (16) zur Drehbewegung um die Schwenkachse (A) antreibenden Klappenantrieb (12) gekoppelt ist.

## Claims

1. Exhaust gas flap, especially for the exhaust gas stream of an internal combustion engine, comprising a flap tube (22), a flap diaphragm (24), which is carried in the interior of the flap tube (22) on a pivot shaft (16) rotatable about a pivot axis (A), with at least one flap wing (28, 30) mounted on the pivot shaft (16), as well as a wing stop (32, 34) in association with at least one flap wing (28, 30) on an inner circumferential area of the flap tube (22), wherein in association with at least one flap wing (28, 30), the wing stop (32, 34) associated with this flap wing (28, 30) has a stop surface (50, 44) oriented essentially in the direction of a flap tube longitudinal axis (L_{K}), and that when the flap diaphragm (24) is positioned in a closed position the flap wing (28, 30) is in contact with the stop surface (50, 44) of the wing stop (32, 34) wherein at least one flap wing (28, 30) has a mounting area (56, 58) having an essentially uncurved mounting surface (60, 64), and an essentially uncurved opposite mounting surface (62, 66), which is located opposite the mounting surface (60, 64), is provided at the pivot shaft (16) in association with this flap wing (28, 30), wherein a mounting recess (52, 54) providing an opposite mounting area and at least partially receiving a mounting area (56, 58) of this flap wing (28, 30) is provided on the outer circumferential area of the pivot shaft (16) in association with at least one flap wing (28, 30), wherein two flap wings (28, 30) are mounted on the pivot shaft (12) and a mounting recess (52, 54) with an opposite mounting surface (62, 66) is provided in association with each flap wing (28, 30),
**characterized in that** the opposite mounting surface (62, 66) located opposite the mounting surface (60, 64) of this flap wing (28, 30) is set back in the direction of the flap tube longitudinal axis (L_{K}) in relation to the stop surface (50, 44).

2. Exhaust gas flap in accordance with claim 1, **characterized in that** the mounting recesses (52, 54) associated with the two flap wings (28, 30) are configured as essentially having radial symmetry in relation to the pivot axis (A).

3. Exhaust gas flap in accordance with one of the preceding claims, **characterized in that** the opposite mounting surfaces (62, 66) associated with the two flap wings (28, 30) are arranged essentially parallel to one another.

4. Exhaust gas flap in accordance with one of the above claims, **characterized in that**, the opposite mounting surface (62, 66) located opposite the mounting surface (60, 64) of this flap wing (28, 30) is arranged essentially parallel to the stop surface (50, 44).

5. Exhaust gas flap in accordance with claim 3 and claim 4, **characterized in that** in association with each flap wing (28, 30), the wing stop (32, 34) associated with this flap wing (28, 30) has a stop surface (50, 44) oriented essentially in the direction of a flap tube longitudinal axis (L_{K}), and that a distance (d) of the opposite mounting surfaces (62, 66) associated with the two flap wings (28, 30) to one another is smaller than a distance (D) of the stop surfaces (50, 44) associated with the two flap wings (28, 30) to one another in the direction of the flap tube longitudinal axis (L_{K}).

6. Exhaust gas flap in accordance with one of the above claims, **characterized in that** the mounting recess (52, 54) provided in association with at least one flap wing (28, 30) provides the opposite mounting surface (62, 66) located opposite the mounting surface (60, 64) of this flap wing (28, 30), or/and that at least one mounting recess (52, 54) is provided only in the length area of the pivot shaft (16) extending in the interior of the flap tube (22).

7. Exhaust gas flap in accordance with one of the preceding claims, **characterized in that** in association with at least one flap wing (28, 30), a mounting stop (68, 70) predetermining a positioning of this flap wing (28, 30) in relation to the pivot shaft (16) is provided on the pivot shaft (16) essentially at right angles to the pivot axis (A).

8. Exhaust gas flap in accordance with claim 6 and claim 7, **characterized in that** the mounting recess (52, 54) associated with this flap wing (28, 30) provides a mounting stop surface (68, 70), which is preferably essentially at right angles to the opposite mounting surface (62, 66) provided by this mounting recess (52, 54).

9. Exhaust gas flap in accordance with one of the preceding claims, **characterized in that** the pivot shaft (16) is carried rotatably about the pivot axis (A) in its two axial end areas (18, 20) at the flap tube (22), and that a stop surface (50, 44) of at least one wing stop (32, 34) extends in the circumferential direction from a first circumferential end area (38) positioned in the area of a first axial end area (18) of the pivot shaft (16) without interruption to a second circumferential end area (40) positioned in the area of a second axial end area (20) of the pivot shaft (16).

10. Exhaust gas flap in accordance with one of the preceding claims, **characterized in that** the pivot shaft (16) is coupled in one of its two axial end areas (18, 20) with a flap drive (12) driving the pivot shaft (16) for the rotation about the pivot axis (A).

## Revendications

1. Clapet de gaz d'échappement, en particulier pour le courant de gaz d'échappement d'un moteur à combustion interne, comprenant un tube de clapet (22), un diaphragme de clapet (24) supporté à l'intérieur du tube de clapet (22) à un arbre de pivotement (16) pivotable autour d'un axe de pivotement (A) avec au moins une aile de clapet (28, 30) monté à l'arbre de pivotement (16) ainsi que, en association à au moins une aile de clapet (28, 30), à une région de circonférence intérieure du tube de clapet (22) un arrêt d'aile (32, 34), où en association à au moins une aile de clapet (28, 30) l'arrêt d'aile (32, 34) associé à cette aile de clapet (28, 30) comprend une surface d'arrêt (50, 44) orientée essentiellement dans le sens d'un axe longitudinal de tube de clapet (L_{K}) et où dans le cas d'un diaphragme de clapet (24) positionné dans une position de fermeture, l'aile de clapet (28, 30) est en appui contre la surface d'arrêt (50, 44) de l'arrêt d'aile (32, 34), où au moins une aile de clapet (28, 30) comprend une région de montage (56, 58) avec une surface de montage (60, 64) essentiellement non courbée et où une contre-surface de montage (62, 66) essentiellement non courbée opposée à la surface de montage (60, 64) est prévue à l'arbre de pivotement (16) en association à ladite aile de clapet (28, 30), où une encoche de montage (52, 54) mettant à disposition une contre-région de montage et recevant au moins partiellement une région de montage (56, 58) de ladite aile de clapet (28, 30) est prévue dans la région de circonférence extérieure de l'arbre de pivotement (16) en association à au moins une aile de clapet (28, 30), où deux ailes de clapet (28, 30) sont prévues à l'arbre de pivotement (12) et où en association à chaque aile de clapet (28, 30) une encoche de montage (52, 54) est prévue avec une contre-surface de montage (62, 66),
**caractérisé en ce que** la contre-surface de montage (62, 66) opposée à la surface de montage (60, 64) de ladite aile de clapet (28, 30) est décalée en retrait par rapport à la surface d'arrêt (50, 44) dans le sens de l'axe longitudinal de tube de clapet (L_{K}).

2. Clapet de gaz d'échappement selon la revendication 1, **caractérisé en ce que** les encoches de montage (52, 54) associées aux deux ailes de clapet (28, 30) sont adaptées essentiellement à symétrie de point par rapport à l'axe de pivotement (A).

3. Clapet de gaz d'échappement selon une des revendications précédentes, **caractérisé en ce que** les contre-surfaces de montage (62, 66) associées aux deux ailes de clapet (28, 30) sont arrangées de manière parallèle.

4. Clapet de gaz d'échappement selon une des revendications précédentes, **caractérisé en ce que** la contre-surface de montage (62, 66) opposée à la surface de montage (60, 64) de ladite aile de clapet (28, 30) est arrangée de manière essentiellement parallèle à la surface d'arrêt (50, 44).

5. Clapet de gaz d'échappement selon les revendications 3 et 4, **caractérisé en ce que**, en association à chaque aile de clapet (28, 30), l'arrêt d'aile (32, 34) associé à ladite aile de clapet (28, 30) comprend une surface d'arrêt (50, 44) orientée essentiellement dans le sens d'un axe longitudinal de tube de clapet (L_{K}) et **en ce qu'**une distance (d) entre les contre-surfaces de montage (62, 66) associées aux deux ailes de clapet (28, 30) est plus petite qu'une distance (D) entre les surfaces d'arrêt (50, 44) associées aux deux ailes de clapet (28, 30) dans le sens d'un axe longitudinal de tube de clapet (L_{K}).

6. Clapet de gaz d'échappement selon une des revendications précédentes, **caractérisé en ce que** ladite encoche de montage (52, 54) prévue en association à au moins une aile de clapet (28, 30) met à disposition ladite contre-surface de montage (62, 66) opposée à la surface de montage (60, 64) de cette aile de clapet (28, 30), ou/et **en ce qu'**au moins une encoche de montage (52, 54) est prévue seulement dans la région de longueur de l'arbre de pivotement (16) s'étendant dans l'intérieur du tube de clapet (22).

7. Clapet de gaz d'échappement selon une des revendications précédentes, **caractérisé en ce que**, en association à au moins une aile de clapet (28, 30), un arrêt de montage (68, 70) définissant un positionnement de cette aile de clapet (28, 30) par rapport à l'arbre de pivotement (16) essentiellement orthogonal à l'axe de pivotement (A) est prévu à l'arbre de pivotement (16).

8. Clapet de gaz d'échappement selon la revendication 6 et la revendication 7, **caractérisé en ce que** l'encoche de montage (52, 54) associée à cette aile de clapet (28, 30) met à disposition une surface d'arrêt de montage (68, 70), de préférence essentiellement orthogonal à la contre-surface de montage (62, 66) prévue par cette encoche de montage (52, 54).

9. Clapet de gaz d'échappement selon une des revendications précédentes, **caractérisé en ce que** l'arbre de pivotement (16) est supporté dans ses deux régions d'extrémité axiales (18, 20) au tube de clapet (22) de manière pivotable autour de l'axe de pivotement (A) et **en ce qu'**une surface d'arrêt (50, 44) d'au moins un arrêt d'aile (32, 34) s'étend dans le sens circonférentiel d'une première région d'extrémité circonférentielle (38) positionnée dans la région d'une première région d'extrémité axiale (18) de l'arbre de pivotement (16) sans interruption jusqu'à une deuxième région d'extrémité circonférentielle (40) positionnée dans la région d'une deuxième région d'extrémité axiale (20) de l'arbre de pivotement (16).

10. Clapet de gaz d'échappement selon une des revendications précédentes, **caractérisé en ce que** l'arbre de pivotement (16) est accouplé dans une de ses deux régions d'extrémité axiales (18, 20) à un entraînement de clapet (12) entraînant l'arbre de pivotement (16) pour un mouvement de rotation autour de l'axe de pivotement (A).
